# EUROPEAN PATENT APPLICATION

(11) **EP 3 404 255 A1**
(43) Date of publication of application: **21.11.2018**
(21) Application number: 16885209.3
(22) Date of filing: 25.08.2016
(51) Int. Cl.: F03B 17/02, F03B 1/00, G01F 23/00, F16H 19/04, H01H 35/18, G05D 9/00

(54) **BUOYANCY-DRIVEN POWER GENERATION APPARATUS**

(30) Priority: 12.01.2016 KR 20160003941; 22.01.2016 KR 20160008397
(71) Applicant: Jeong, Jae Hui, Seoul 01081 (KR)
(72) Inventor: Jeong, Jae Hui, Seoul 01081 (KR)
(74) Representative: Lindner Blaumeier Patent- und Rechtsanwälte
(86) International application number: PCT/KR2016/009460
(87) International publication number: WO 2017/122898

(57) **Abstract**

The present invention relates to a buoyancy-driven power generation apparatus, which generates electricity by means of water power, gravity, and buoyancy, and differentially supplies fluid according to a water level so as to enable the efficiency of a pump for supplying the fluid to improve.

## Description

### [Technical Field]

The present invention relates to a buoyancy-driven power generation apparatus and more particularly, to a buoyancy-driven power generation apparatus capable of generating electric energy by the rotation of a turbine due to the discharge of a fluid while generating the electric energy by a lifting operation of a buoyant body due to supply and discharge of the fluid.

### [Background Art]

Since power generation plants using natural environments utilize virtually permanent natural forces such as wind, tidal, solar heat and/or geothermal heat rather than consumptive energy resources such as fossil fuels, the power generation plants are preferable and eco-friendly even in terms of reduced global resource consumption, and thus, have been intensively researched and developed on the natural scale. However, existing power generation plants using natural environments such as wind, tidal, solar heat and/or geothermal heat have a disadvantage of being severely limited by natural environmental conditions. For example, there are constraints on installation requirements that the wind power generation needs to be provided in a place where wind is blown, and the solar power generation needs to be provided in a place where the sun is shining.

As the related art relating to the power generation apparatus, Korean Patent Publication No. 10-2007-119187 (published on December 20, 2007) discloses a buoyancy-driven power generation apparatus. The buoyancy-driven power generation apparatus is characterized by including a water storage tank filled with water, a charging unit that charges a gas-filled ball from the bottom of the water storage tank into the water storage tank, a rotation unit that receives the ball charged from the bottom of the water storage tank and orbit-rotates in a vertical direction in the water storage tank using buoyancy of the ball to be lifted to the water surface, a convey unit that collects the ball lifted to the water surface to convey the ball to the charging unit through a moving path formed at the side and the bottom of the water storage tank, and a fluid level adjusting unit that adjusts a fluid level and a water pressure in the charging unit so as to charge the ball into the water by applying a hydraulic pressure such as a bottom water pressure of the water storage tank to the ball located in a charging standby state into the charging unit, in which an electric generator is connected to the rotation unit to generate power by rotating the rotation unit.

Since the buoyancy-driven power generation apparatus may obtain electric energy by orbit-circulating the buoyant body by bubbles lifted to the water surface, there is an advantage that the buoyancy-driven power generation apparatus has no noise and may be utilized in various fields due to few restrictions of installable environmental conditions. However, the related art discloses only a technical idea using the orbital circulation of the buoyant body, and there is a problem that a specific structure for improving the orbital circulation efficiency of the buoyant body is not disclosed.

### [Disclosure]

### [Technical Problem]

In order to solve the problems in the related art, an object of the present invention is to provide a buoyancy-driven power generation apparatus which generates electricity by means of water power, gravity, and buoyancy.

Another object of the present invention is to provide a buoyancy-driven power generation apparatus which differentially supplies a fluid according to a fluid level so as to improve the efficiency of a pump for supplying the fluid.

### [Technical Solution]

An exemplary embodiment of the present invention provides a buoyancy-driven power generation apparatus comprising: a main body housing (10) having a main body outlet (11) formed at a lower side thereof and an opened upper portion thereof; a buoyant body (20) provided inside the main body housing (10); a discharge turbine (30) provided in a discharge direction of the main body outlet (11); a storage tank (40) provided at a lower side of the main body outlet (11) and storing the fluid discharged from the main body outlet (11); a pumping pipe (50) supplying the fluid received in the storage tank 40 to the main body housing (10) using a pump (52); a buoyant-driven power generator (60) including a rack gear (61) vertically provided at a central portion of the upper surface of the buoyant body (20) and a pinion gear (62) provided at the upper portion of the main body housing (10) to engage with the rack gear (61); and a power generator (70) converting rotational energy transmitted from the discharge turbine (30) and the buoyant-driven power generator (60) into electric energy.

### [Advantageous Effects]

According to the present invention, the buoyant body ascends or descends by supplying or discharging the fluid to or from the main body housing, and as a result, the buoyancy-driven power generator rotates forward or backward to generate energy and simultaneously, the energy is generated using the fluid discharged from the main body housing, thereby enhancing power generation efficiency.

Further, when the pump is operated to supply the fluid, a control valve is selectively opened and closed so as to supply the fluid to a branch pipe having the smallest power consumption of the pump, and as a result, the discharge fluid is supplied to the main body housing by minimum power again, thereby enhancing the power generation efficiency.

### [Description of Drawings]

FIG. 1 is a perspective view of a buoyancy-driven power generation apparatus according to the present invention.
FIG. 2 is a cross-sectional view of the buoyancy-driven power generation apparatus according to the present invention.
FIGS. 3a and 3b are operational state views of a buoyant body which is applied to the buoyancy-driven power generation apparatus according to the present invention.
FIGS. 4 and 5 are state views showing a process of supplying a fluid by adjusting opening and closing of a pumping pipe by control of a controller in the buoyancy-driven power generation apparatus according to the present invention.
FIG. 6 is an operational state view of a buoyancy-driven power generator which is applied to the buoyancy-driven power generation apparatus according to the present invention.
FIG. 7 is a view showing another example of a buoyant body in the buoyancy-driven power generation apparatus according to the present invention.
FIG. 8 is a configuration view of a state in which a plurality of buoyancy-driven power generation apparatuses according to the present invention is provided.
FIG. 9 is a configuration view of another example in which a plurality of buoyancy-driven power generation apparatuses according to the present invention is provided.

### [Explanation of Reference Numerals and Symbols]

| | |
|---|---|
| 1: First buoyancy-driven power generation apparatus | |
| 2: Second buoyancy-driven power generation apparatus | |
| 10 : Main body housing | |
| 11 : Main body outlet | 12 : Level sensor |
| 20 : Buoyant body | 21: Buoyant body outlet |
| 22: Inlet | 21c : support |
| 30 : Discharge turbine | 31: Second discharge turbine |
| 40 : Storage tank | 50 : Pumping pipe |
| 51 : Branch pipe | 52 : Pump |
| 60 : Buoyancy-driven power generator | 61 : Rack gear |
| 62 : Pinion gear | 63 : Multiplying gear |
| 70 : Power generator | 80 : Controller |
| V : Control valve | |

### [Modes of the Invention]

The present invention relates to a buoyancy-driven power generation apparatus, which generates electricity by means of water power, gravity, and buoyancy, and differentially supplies a fluid according to a fluid level so as to improve the efficiency of a pump for supplying the fluid.

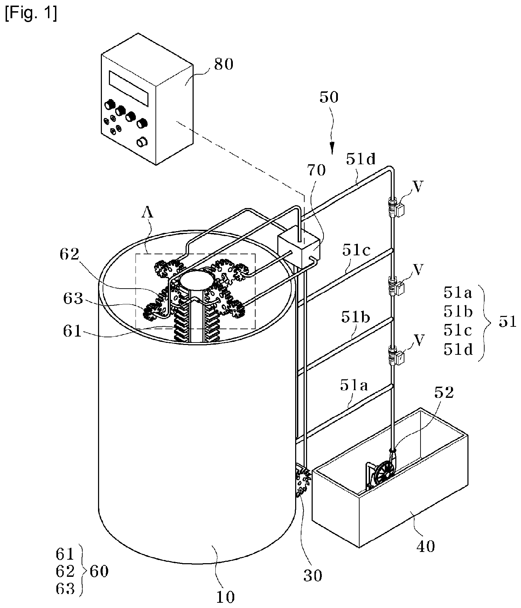

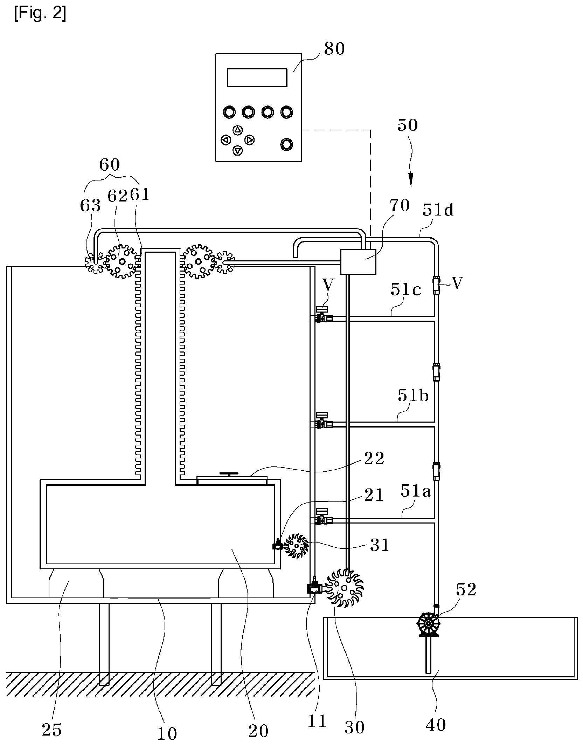

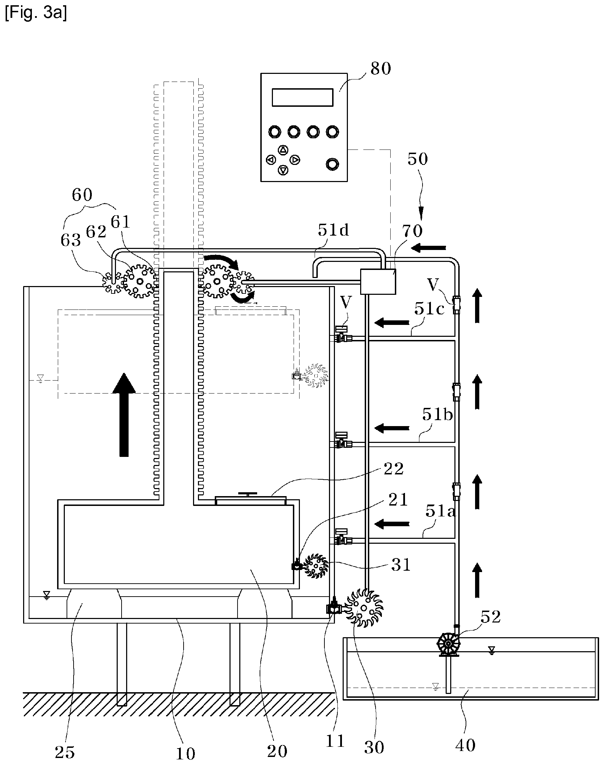

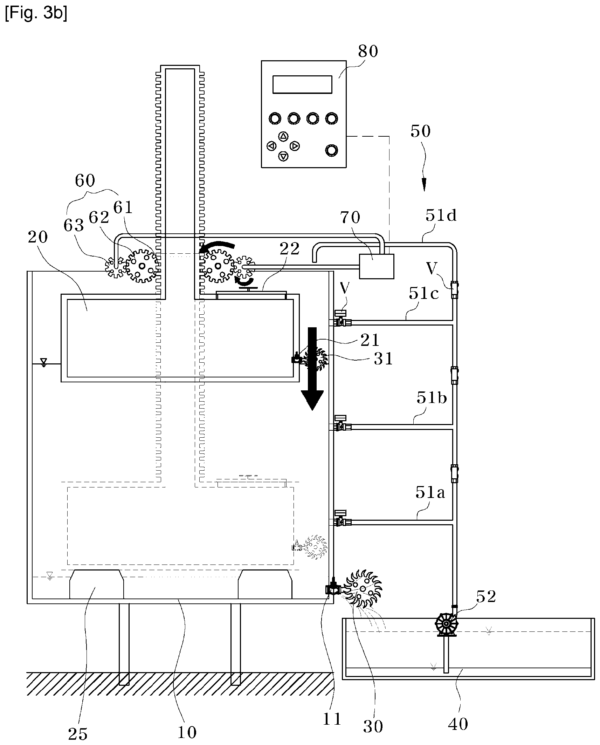

FIG. 1 is a perspective view of a buoyancy-driven power generation apparatus according to the present invention, FIG. 2 is a cross-sectional view of the buoyancy-driven power generation apparatus according to the present invention, and FIGS. 3a and 3b are operational state views of a buoyant body 20 which is applied to the buoyancy-driven power generation apparatus according to the present invention.

The buoyancy-driven power generation apparatus of the present invention includes a main body housing 10, a buoyant body 20, a discharge turbine 30, a storage tank 40, a pumping pipe 50, a buoyant-driven power generator 60, a power generator 70, and a controller 80.

The main body housing 10 receives a fluid (for example, water or like) therein and discharges the received fluid according to a control, and may be configured to have a main body outlet 11 formed at a lower side and have an opened upper portion for receiving the fluid.

The buoyant body 20 is provided inside the main body housing 10 and floats and ascends by the fluid supplied to the inside of the main body housing 10 and descends by the discharge of the fluid. Herein, the buoyant body 20 may be configured to have a hallow shape therein and may have an inlet 22 through which some of the fluid supplied to the inside of the main body housing 10 flows into the buoyant body 20. Further, a buoyant body outlet 21 may be configured to discharge the fluid flowing into the buoyant body 20. Here, the a control valve is configured to control a flow path of the buoyant body outlet 21.

The discharge turbine 30 is provided in a discharge direction of the main body outlet 11 and rotates by the fluid discharged from the main body outlet 11 to generate water power.

Further, a second discharge turbine 31 may be provided in a discharge direction of the buoyant body outlet 21 provided in the buoyant body 20.

The storage tank 40 is provided at a downstream side of the main body outlet 11 and stores the fluid discharged from the main body outlet 11.

At this time, the size of the storage tank 40 may be relatively larger than a fluid capacity of the main body housing 10 so as to receive all of the fluid received in the main body housing 10.

The pumping pipe 50 is a convey line for pumping the fluid received in the storage tank 40 by a pump 52 to supply the fluid to the main body housing 10 and has a plurality of branch pipes 51 provided with a control valve V. At this time, the pump 52 may be configured by a water pump and configured to operate using electric energy generated from the power generator 70.

Meanwhile, in the pumping pipe 50, a branch pipe 51a provided at the lowermost side among the branch pipes 51 is provided at a position which is relatively higher than the position of the main body outlet 11 and an outlet of a branch pipe 51d provided at the uppermost side is formed at a position corresponding to a height of the main body housing 10. Here, the number of branch pipes 51a, 51b, 51c and 51d may vary according to the height of the main body housing 10.

The buoyant-driven power generator 60 performs a function of generating electric energy by converting a straight motion into a rotation motion of the ascending operation of the buoyant body 20 and includes a rack gear 61 vertically provided at a central portion of the upper surface of the buoyant body 20 and a pinion gear 62 provided at the upper portion of the main body housing 10 to engage with the rack gear 61. In the above configuration, the rack gear 61 ascends and descends according to the ascending and descending of the buoyant body 20 and the pinion gear 62 configured to engage with the rack gear 61 rotates to generate rotational energy. At this time, an accelerating gear 63 for further accelerating a rotation force may be provided in the pinion gear 62.

The power generator 70 converts rotational energy transmitted from the discharge turbine 30 and the buoyant-driven power generator 60 into electric energy.

The controller 80 controls opening and closing of the main body outlet 11, opening and closing of the control valve V, and driving of the pump. At this time, the control valve V may be configured to be remotely opened and closed by the controller 80.

A process of generating electric energy according to an operation of the buoyancy-driven power generation apparatus according to the present invention configured above will be described.

The process of generating electric energy includes:
1. generating power by buoyancy of the buoyant body 20 due to the fluid reception,
2. generating water power by discharge of the received fluid,
3. generating power using potential energy by descending of the buoyant body, and
4. generating water power by discharge of the fluid received in the buoyant body.

FIG. 3a shows a process of generating electric energy by the buoyancy of the buoyant body 20 due to the reception of the fluid. As shown in the accompanying FIG. 3a, the fluid received in the storage tank 40 is again received in the main body housing 10 through the pumping pipe 50 by the pumping of the pump 52 and then the buoyant body 20 ascends. The rack gear 61 ascends by the ascending of the buoyant body 20 and the pinion gear 62 engaging with the rack gear 61 rotates to generate the rotational energy. The power is generated using the rotational energy of the pinion gear 62.

FIG. 3b shows a process of generating the electric energy by discharge of the received fluid, and as shown in FIG. 3b, when the main body outlet 11 is opened while the fluid is received in the main body housing 10, the fluid is discharge through the main body outlet 11 and the discharge turbine 30 is rotated by the discharge of the fluid.

At this time, the buoyant body 20 descends by the discharge of the fluid. The rack gear 61 descends by the descending of the buoyant body 20 and the pinion gear 62 engaging with the rack gear 61 rotates to generate the rotational energy. The power is generated using the rotational energy of the pinion gear 62.

The power generation using the potential energy by the descending of the buoyant body may be divided into two types such as power generation by the descending of the buoyant body together with the discharge of the fluid and power generation by the descending of the buoyant body while the fluid is discharged.

The first type is a type in which the buoyant body 20 ascending by the buoyancy rotates the pinion gear 62 while descending according to a fluid level lowered by the discharge of the fluid. The second type is a type in which the position of the buoyant body 20 ascending until the discharge of the fluid is completed is fixed and the buoyant body 20 ascending by the buoyancy is controlled to descend after the discharge of the fluid is completed to rotate the pinion gear 62.

In the case of the first type, a configuration to be additionally provided is not required, but the first type generates power by converting the potential energy of the buoyant body 20 into electric energy according to a discharge speed of the fluid and has a disadvantage that electric energy to be generated is reduced due to a low descending speed of the buoyant body 20. On the other hand, the second type has a disadvantage that a device for fixing the buoyant body 20 ascending until the fluid is discharged, but has an advantage that the electric energy to be generated is increased due to a high descending speed of the buoyant body 20.

In the above type, the potential energy is increased in proportional to the weight, height, and acceleration of the buoyant body. As a result, the second type in which the buoyant body 20 ascending by the buoyancy is controlled to descend after the fluid is discharged can generate a relatively large amount of electric energy as compared with the type in which the buoyant body 20 descends.

That is, when the second type is adopted, the buoyant body 20 is controlled to fix a position of the buoyant body 20 to a top point by ascending by the buoyancy, and thereafter, the buoyant body 20 is controlled to descend after the fluid is completely discharged.

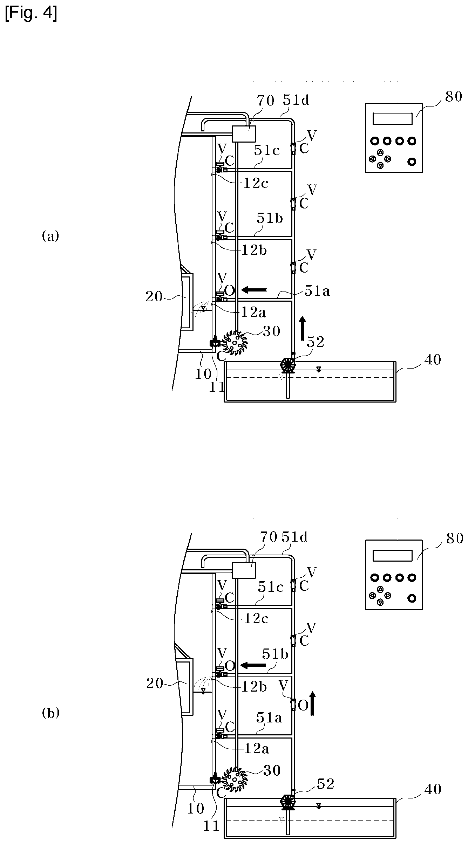

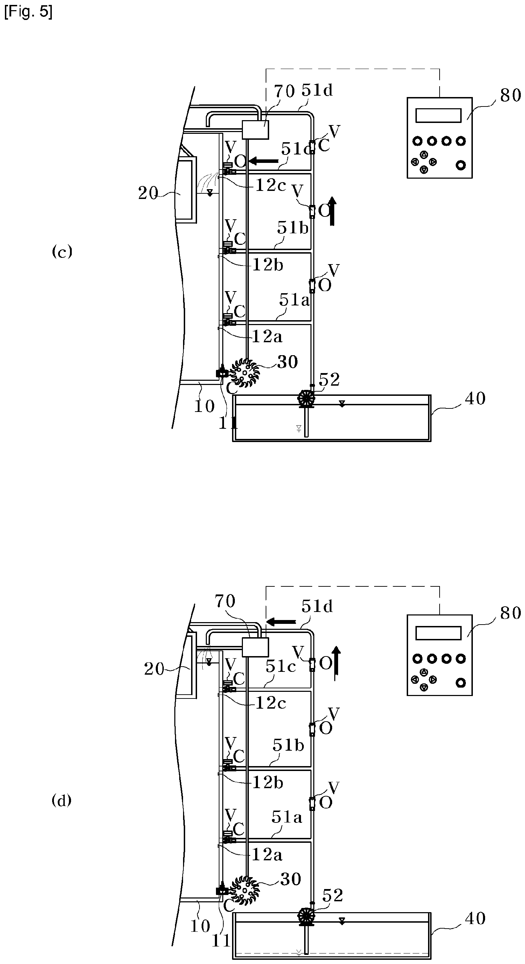

FIGS. 4 and 5 are state views showing a process of supplying a fluid by adjusting opening and closing of the pumping pipe 50 by control of the controller 80 in the buoyancy-driven power generation apparatus according to the present invention. For reference, 'O' shown in the drawing represents Open and 'C' represents Close.

The buoyancy-driven power generation apparatus according to the present invention is configured to convey the discharged fluid to the pumping pipe and receive the fluid in the main body housing 10 through a plurality of branch pipes 51 provided in the pumping pipe.

That is, the fluid received in the main body housing 10 is pumped by adjusting the pumping height according to a fluid level of the fluid and an amount of the electric energy used for pumping varies according to the pumping height. In addition, a consumed amount of electric energy varies according to a pumping amount and a pumping height of the electric energy used for pumping, and as the pumping height is decreased, the used electric energy is decreased. That is, in the case of using the same electric energy, as the pumping height is decreased, a larger amount of fluid may be pumped.

Referring to FIGS. 4 and 5, in the branch pipe 51a positioned at the lowermost side among the branch pipes 51, the electric energy (power) consumed for supplying the fluid is lowest and the power consumed for supplying the fluid to the branch pipe 51b positioned at the uppermost side is largest.

Accordingly, in the buoyancy-driven power generation apparatus of the present invention, the controller 80 determines opening and closing of the control valve V provided in each branch pipe 51 and adjusts the power to be used by the pump 52 according to the level of the fluid received in the main body housing 10 so that the fluid is received in the main body housing 10.

When describing in more detail with reference to the drawings of the present invention, in the case of initially operating the pump 52 for receiving the fluid in the main body housing 10, as shown in FIG. 4a, the controller 80 opens the control valve V of the branch pipe 51 which is positioned at the lowermost side, that is, has the smallest power required for supplying the fluid by the pump 52 and closes all of the remaining control valves V. Thereafter, the controller 80 calculates minimum power required for supplying the fluid to the corresponding branch pipe 51a by the pump 52 to transmit the corresponding power to the pump 52 and supply the fluid.

Thereafter, as shown in FIG. 4b, when the level of the fluid received in the main body housing 10 becomes higher than the height of the corresponding branch pipe 51a, the control valve V of the corresponding branch pipe 51a is closed. After the control valve V of the branch pipe 51b provided at the next higher position is opened, the minimum power required for supplying the fluid to the corresponding branch pipe 51b is calculated and the corresponding power is transmitted to the pump 52 so that the fluid is supplied. Next, as shown in FIG. 5, the process is repeatedly performed, and the fluid may be received up to the uppermost portion of the main body housing 10.

Meanwhile, when the fluid received in the main body housing 10 is discharged to the main body outlet 11, all the control valves V are closed.

In this case, in order to facilitate the above process, the buoyancy-driven power generation apparatus according to the present invention further includes a level sensor 12 provided on a side wall of the main body housing 10, and the controller 80 selects a branch pipe to be supplied with the fluid from the branch pipes 51 according to a sensing result value of the level sensor 12.

At this time, in the level sensor 12, as shown in FIGS. 4 and 5, since the controller 80 is configured to select the branch pipe 51 to which the fluid is to be supplied, level sensors 12a, 12b and 12c are provided in the same number as the number of the branch pipes 51a, 51b, and 51c. Preferably, the branch pipes 51a, 51b, and 51c and the level sensors 12a, 12b and 12c may be matched to 1:1.

That is, referring to FIG. 4, the plurality of level sensors 12a, 12b and 12c are provided according to the heights of the branch pipes 51a, 51b, and 51c to make pairs. When the fluid level reaches the height of each level sensor 12, the controller 80 automatically opens a control valve V of a branch pipe disposed at a relatively high position among the branch pipes adjacent to the corresponding level sensor and closes control valves V provided in the remaining branch pipes other than the branch pipe to supply the fluid only to the branch pipe in which the corresponding control valve V is opened.

In this case, in order to further enhance power usage efficiency of the pump 52, each level sensor may be provided at a position adjacent to a lower portion of each branch pipe outlet making a pair.

When the level sensors 12a, 12b and 12c are provided above the branch pipes 51a, 51b and 51c, the level of the fluid received in the main body housing 10 needs to be higher than that of the branch pipes 51a, 51b, and 51c, the sensing of the level sensors 12a, 12b, 12c is performed, and the branch pipes 51a, 51b, 51c to be supplied with the fluid may be changed. That is, when the outlets of the branch pipes 51a, 51b and 51c paired with the respective level sensors 12a, 12b and 12c are supplied with the fluid in a state of being immersed in water, the fluid needs to be supplied at a pressure larger than a water pressure of the fluid received in the main body housing 10, and thus there is a problem that the power consumption of the pump 52 may be increased.

Further, when the level sensors 12a, 12b and 12c are not provided at the lower portion near the branch pipes 51a, 51b and 51c, but provided at the lower portion relatively far away from each other, while the level of the fluid received in the main body housing 10 does not reach the level of the corresponding branch pipes 51a, 51b and 51c, the controller 80 closes the control valves V of the branch pipes 51a, 51b and 51c, and as the branch pipes 51a, 51b, and 51c provided at relatively high positions are opened, the pump 52 needs to consume more power.

Therefore, in the present invention, the level sensors 12a, 12b, and 12c paired with the respective branch pipes 51a, 51b, and 51c are positioned at the same height as the outlets of the branch pipes 51a, 51b, and 51c, and thus it is preferable to reduce the power loss to the maximum to increase the power generation efficiency.

That is, according to the present invention, since the pump 52 may minimize the electric energy used in the pumping by the above configuration, there is an advantage that the fluid discharged with the minimum electric energy may be finally received in the main body housing 10 again.

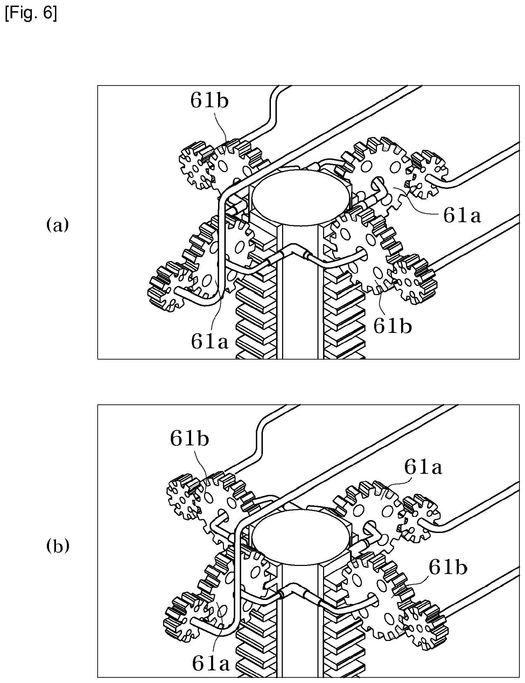

FIG. 6 is an operational state view of the buoyancy-driven power generator 60 which is applied to the buoyancy-driven power generation apparatus according to the present invention.

The buoyant-driven power generator 60 generates electrical energy as the buoyant body 20 ascends and descends while guiding the movement of the buoyant body 20.

At this time, in the present invention, when a plurality of buoyant-driven power generators 60 are provided, more power is generated and the movement of the buoyant body 20 may be further stably performed.

That is, the pinion gear 62 performs the forward rotation (a rotation direction by ascending) and the backward rotation (a rotation direction by descending) as the buoyant body 20 ascends and descends, and the electric energy is produced by the rotation.

However, in the case where the pinion gear 62 is configured to engage with the rack gear 61 at the same time when the pinion gear 62 rotates forward and backward, the power generator using the forward rotation generates a load caused by the backward rotation during backward rotation. Similarly, the power generator using the backward rotation generates a load caused by the forward rotation during forward rotation, and thus there may be a problem that the buoyant body 20 does not ascend or descend.

Accordingly, in the present invention, even number of buoyant-driven power generators 60 are provided so as to be opposed to each other, and the buoyant-driven power generator 60 which generates power when the buoyant body 20 ascends or descends may be selectively used.

More specifically, as shown in FIG. 6a, when the buoyant body 20 ascends, the pinion gears 62a facing each other among a plurality of pinion gears 62 are disposed to engage with the rack gear 61, and other pinion gears 62b are separated from the rack gear 61 so that the buoyant body 20 ascends.

Thereafter, as shown in FIG. 6b, when the buoyant body 20 descends, the adjacent pinion gears 62b are controlled to engage with the rack gear 61, and when the buoyant body 20 ascends, the pinion gears 62a engaging with the pinion gear 62a are separated from each other so that the buoyant body 20 descends (or ascends).

That is, in the case of the buoyant-driven power generator 60, the pinion gear 62 engaging with the rack gear 61 according to ascending and the pinion gear 62 engaging with the rack gear 61 according to descending are connected to and engage with the rack gear 61 by a clutch (not shown) or controlled to be separated from the rack gear 1, thereby preventing immobility of the buoyant body 20 according to a reverse load of the power generator.

Here, the clutch may use an electronic clutch that is driven by the control of the control unit 80.

Meanwhile, the main body housing 10 may be supported and fixed by a plurality of legs provided at a lower portion thereof, and can be changed in design to have an appropriate force according to the size and weight of the present invention.

In the above configuration, after the fluid inside the main body housing 10 is discharged to the inner bottom surface of the main body housing 10, the electric energy is generated by descending of the buoyant body 20, and the buoyant body 20 may collide with the inner bottom of the main body housing 10 when the buoyant body 20 descends. As a result, in order to prevent the shock, a shock absorbing means 25 may be further included at the lower portion of the buoyant body 20.

In the present invention, as the size increases, it is possible to generate a large amount of rotational energy. Accordingly, since the amount of electric energy converted in proportion to the rotational energy is increased, as the size of the present invention is increased, the electric energy production efficiency is increased.

However, when the size of the buoyancy-driven power generation apparatus according to the present invention is increased, as the internal fluid is discharged when the main body housing 10 has a cylindrical shape, there is a problem that the shock is strongly transmitted according to the collision with the buoyant body 20. In order to solve such a problem, the shock absorbing means 25 is provided on the inner bottom surface of the main body housing 10 so as to mitigate the shock according to collision between the main body housing 10 and the buoyant body 20.

According to the present invention, the shock absorbing means has a plurality of rubber protrusions to support the weight of the buoyant body 20, but the shape of the shock absorbing means may support the weight of the buoyant body 20 and can be changed as long as the shape can relieve the shock caused by the collision of the main body housing 10 and the buoyant body 20.

Meanwhile, the rotation speed of the pinion gear 62 engaging with the rack gear 61 is increased in proportion to the moving speed of the buoyant body 20, and in order to generate more rotational speed according to the ascending speed and the descending speed of the buoyant body 20, a multiplying gear 63 engaging with the pinion gear 62 may be further included.

The multiplying gear 63 is formed to engage with the pinion gear 62 to rotate in conjunction with the rotation of the pinion gear 62.

For example, when a gear ratio of the multiplying gear 63 and the pinion gear 62 is in the range of 1:2 to 100, the number of revolutions of the multiplying gear 63 is 2 to 100 times larger than the number of rotations of the pinion gear 62.

If the number of revolutions of the multiplying gear 63 is two times lower than the number of revolutions of the pinion gear 62, the acceleration effect is slight, and thus it is not preferable. In addition, when the number of revolutions of the multiplying gear 63 is 100 times larger than the number of revolutions of the pinion gear 62, the acceleration ratio becomes excessively large, and the teeth of the multiplying gear 63 may be damaged, and thus it is not preferable. Preferably, when the gear ratio of the multiplying gear 63 and the pinion gear 62 is in the range of 1:25 to 50, the number of revolutions of the multiplying gear 63 may be configured to be 2 to 50 times larger than the number of rotations of the pinion gear 62.

In the present invention, it is exemplified that the pinion gear 62 and the multiplying gear 63 are directly connected to each other so that the rotational energy generated from the pinion gear 62 is multiplied through the multiplying gear 63 and transmitted to the power generator, but it is also possible that the pinion gear 62 and the multiplying gear 63 are interlocked by a separate chain (not shown).

Water power generation by discharge of the fluid received in the buoyant body is performed when the descending of the buoyant body 20 is completed.

When the fluid is discharged and the descending of the buoyant body 20 is completed, the buoyant body outlet 21 provided in the buoyant body 20 is opened. While the fluid received in the buoyant body 20 is discharged through the buoyant body outlet 21 by the opening of the buoyant body outlet 21, the second discharge turbine 31 is rotated and the electric energy is generated by the rotation of the second discharge turbine 31.

In addition, while the fluid discharged through the buoyant body outlet 21 is discharged through the main body outlet 11 again, the electric energy is generated by rotating the discharge turbine 30.

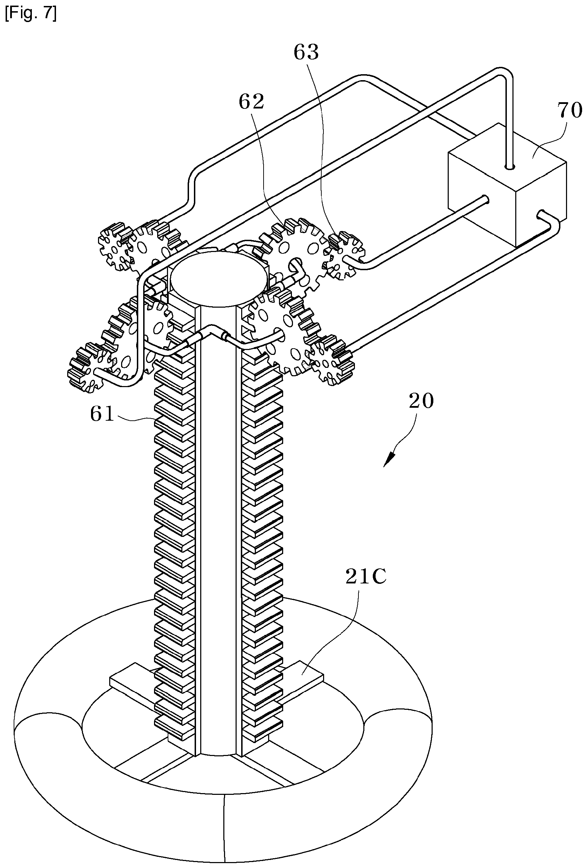

FIG. 7 is a view showing another example of a buoyant body in the buoyancy-driven power generation apparatus according to the present invention.

The buoyant body 20 may have an internal hollow donut shape. When the buoyant body 20 has a donut shape, a support 21c supporting the rack gear 61 extending to the upper portion of the buoyant body 20 to be inserted may be further provided. Accordingly, since the volume and weight of the buoyant body 20 can be reduced, it is advantageous that buoyancy-driven power generation may be performed more efficiently.

In the buoyancy-driven power generation apparatus according to the present invention configured as described above, an energy storage system (ESS) for storing the generated electric energy may be added. However, in the case of using an alternator, since it is necessary to convert the generated AC power into DC power again and input the converted power to the energy storage system, there is a problem in that the loss due to energy conversion may occur, and an additional cost for configuring the energy storage system is required.

Accordingly, a plurality of buoyancy-driven power generation apparatuses according to the present invention is provided to continuously generate electric energy by applying the generated electric energy to the pump 52 of other adjacent buoyancy-driven power generation apparatuses.

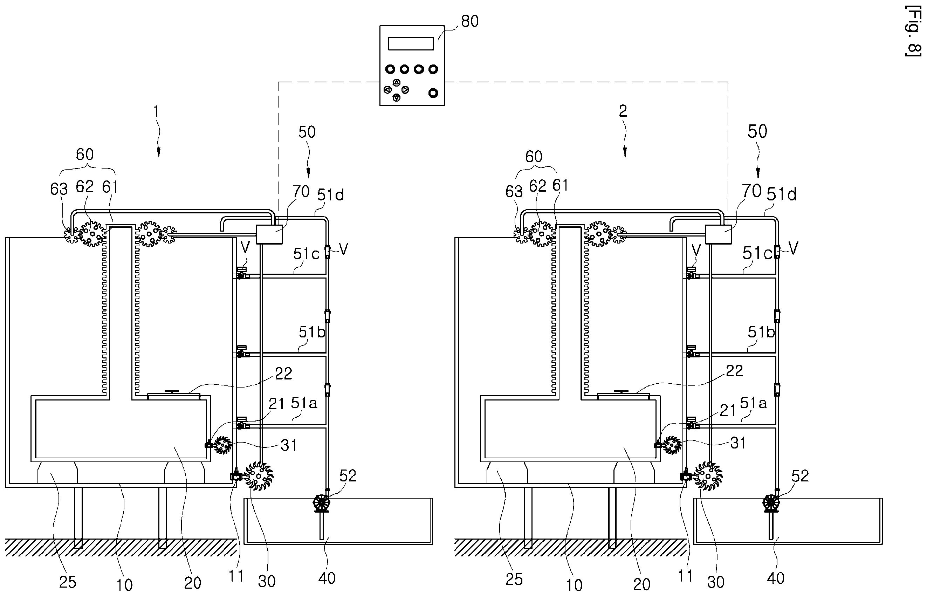

FIG. 8 illustrates a configuration view of a state in which a plurality of buoyancy-driven power generation apparatuses according to the present invention is provided.

Referring to FIG. 8, electric energy generated by a buoyancy-driven power generation apparatus 1 is applied to a pump 52 of a buoyancy-driven power generation apparatus 2 adjacent thereto and configured to receive the fluid in the main body housing 10 of the buoyancy-driven power generation apparatus 2.

That is, in the buoyancy-driven power generation apparatus 1, the electric energy generated by the discharge of the received fluid and the electric energy generated by the potential energy due to the descending of the buoyant body are applied to the buoyancy-driven power generation apparatus 2 adjacent thereto, and in this process, in the buoyancy-driven power generation apparatus 2, the electric energy by ascending of the buoyant body 20 according to the reception of the fluid is generated.

At this time, the electric energy generated by the buoyancy of the buoyant body 20 due to the fluid reception of the buoyancy-driven power generation apparatus 2 may be output as surplus power.

On the contrary, when the generation of electrical energy in the buoyancy-driven power generation apparatus 1 is interrupted, in the buoyancy-driven power generation apparatus 2, which is in an adjacent position, the fluid is received in the main body housing 10.

Accordingly, the buoyancy-driven power generation apparatus 2 disposed adjacent thereto discharges the received fluid, and the electric energy generated by the discharge and the electric energy generated by the potential energy according to the descending of the buoyant body are applied to the buoyancy-driven power generation apparatus 1. Accordingly, in the buoyancy-driven power generation apparatus 1, electric energy is generated by the ascending of the buoyant body 20 according to the reception of the fluid, and the electric energy generated by ascending may be outputted as surplus electric power.

In other words, the electric energy generated by the water power generation by the discharge of the received fluid and the power generation by using the potential energy due to the descending of the buoyant body is applied to other buoyancy-driven power generation apparatuses adjacent to each other, and the buoyancy-driven power generation apparatus receiving the electric power generates the electric energy by the power generation by the buoyancy of the buoyant body 20 according to the reception of the fluid.

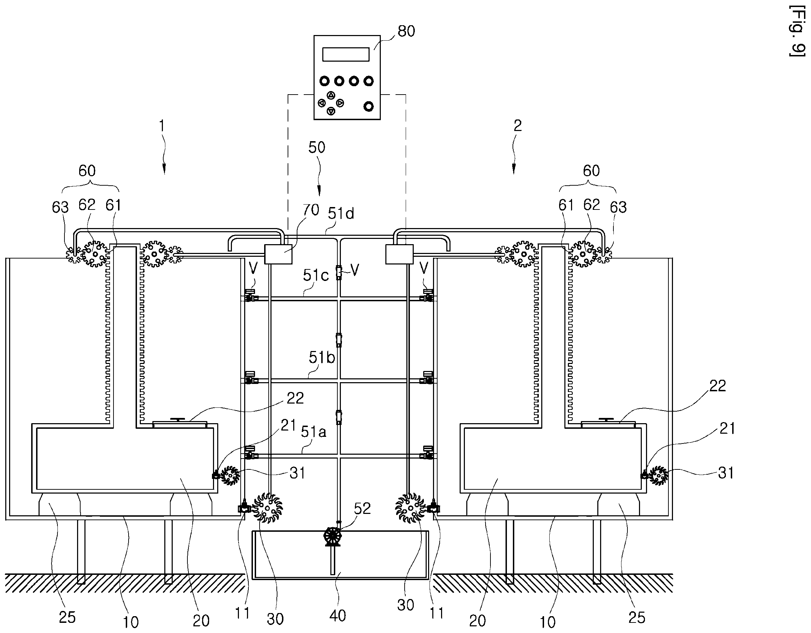

FIG. 9 illustrates a configuration view of another example in which a plurality of buoyancy-driven power generation apparatuses according to the present invention is provided.

Referring to FIG. 9, a buoyancy-driven power generation apparatus 1 and a buoyancy-driven power generation apparatus 2 adjacent thereto are provided, and the buoyancy-driven power generation apparatus 1 and the buoyancy-driven power generation apparatus 2 adjacent thereto are configured to use the pump 52 and the storage tank 40 in common.

As a result, the fluid discharged from the main body housing 10 of the buoyancy-driven power generation apparatus 1 is received in the storage tank 40 and supplied to the main body housing 10 of the buoyancy-driven power generation apparatus 2 by pumping of the pump 52. At this time, while the buoyancy-driven power generation apparatus 1 generates water power by potential energy by descending of the buoyant body and the discharge of the fluid, the buoyancy-driven power generation apparatus 2 generates electric energy by ascending of the buoyant body.

Further, the fluid discharged from the main body housing 10 of the buoyancy-driven power generation apparatus 2 is received in the storage tank 40 and supplied to the main body housing 10 of the buoyancy-driven power generation apparatus 1 by pumping of the pump 52. At this time, while the buoyancy-driven power generation apparatus 2 generates water power by potential energy by descending of the buoyant body and the discharge of the fluid, buoyancy-driven power generation apparatus 1 generates electric energy by ascending of the buoyant body.

That is, the main body housing 10 to which the discharged fluid is supplied is selected according to the control of the controller 40, and the electric energy generated by the discharge of the fluid and the electric energy generated by the descending of the buoyant body are applied to other buoyancy-driven power generation apparatuses adjacent to each other, and the discharged fluid is received in the main body housing 10 receiving the electric energy.

Such a configuration has an advantage of reducing the facility cost by using the pump 52 and the storage tank 40 used for pumping in common.

While preferred exemplary embodiment of the present invention has been described, it is to be understood that the scope of the present invention is not limited thereto and includes substantial equivalent ranges to the exemplary embodiments of the present invention, and it will be apparent to those skilled in the art that various modifications and variations can be made in the present invention without departing from the spirit of the invention.

### [Industrial Availability]

The present invention has been made in order to solve the problems of the related art, and is to provide a buoyancy-driven power generation apparatus which generates electricity by means of water power, gravity, and buoyancy.

## Claims

1. A buoyancy-driven power generation apparatus comprising:
a main body housing (10) having a main body outlet (11) formed at a lower side thereof and an opened upper portion thereof;
a buoyant body (20) provided inside the main body housing (10);
a discharge turbine (30) provided in a discharge direction of the main body outlet (11);
a storage tank (40) provided at a lower side of the main body outlet (11) and storing the fluid discharged from the main body outlet (11);
a pumping pipe (50) supplying the fluid received in the storage tank 40 to the main body housing (10) using a pump (52);
a buoyant-driven power generator (60) including a rack gear (61) vertically provided at a central portion of the upper surface of the buoyant body (20) and a pinion gear (62) provided at the upper portion of the main body housing (10) to engage with the rack gear (61); and
a power generator (70) converting rotational energy transmitted from the discharge turbine (30) and the buoyant-driven power generator (60) into electric energy.

2. The buoyancy-driven power generation apparatus of claim 1, wherein the buoyant body (20) has a hallow shape therein and includes an inlet (22) through which some of the fluid supplied to the inside of the main body housing 10 flows into the buoyant body (20); and a buoyant body outlet (21) for discharging the fluid flowing into the buoyant body (20), and a second discharge turbine (31) is provided in a discharge direction of the buoyant body outlet (21).

3. The buoyancy-driven power generation apparatus of claim 1, wherein the pumping pipe (50) has a plurality of branch pipes (51) provided with a control valve (V) formed along a height, and
further comprising: a controller (80) controlling opening and closing of the control valve (V).

4. The buoyancy-driven power generation apparatus of claim 3, further comprising:
a level sensor (12) provided on a side wall of the main body housing (10),
wherein the controller (80) determines the branch pipe (51) to be supplied with the fluid according to a sensing result value of the level sensor (12).

5. The buoyancy-driven power generation apparatus of claim 1, wherein the buoyancy-driven power generation apparatus is configured by a first buoyancy-driven power generation apparatus and a second buoyancy-driven power generation apparatus, and
electric energy generated from the first buoyancy-driven power generation apparatus is applied to the pump of the second buoyancy-driven power generation apparatus adjacent thereto.

6. The buoyancy-driven power generation apparatus of claim 5, wherein the first buoyancy-driven power generation apparatus (1) and the second buoyancy-driven power generation apparatus (2) adjacent thereto are configured to use the pump (52) and the storage tank (40) in common.
